Europäisches Patentamt

European Patent Office

Office européen des brevets

(19)

(11) Publication number: **0 076 328**
**B1**

(12) **EUROPEAN PATENT SPECIFICATION**

(45) Date of publication of patent specification: **21.06.89**

(51) Int. Cl.⁴: **G 05 B 19/403**

(21) Application number: **82901017.2**

(22) Date of filing: **09.04.82**

(86) International application number:
**PCT/JP82/00115**

(87) International publication number:
**WO 82/03704 28.10.82 Gazette 82/26**

(54) **Programming apparatus.**

(30) Priority: **13.04.81 JP 55253/81**

(43) Date of publication of application:
**13.04.83 Bulletin 83/15**

(45) Publication of the grant of the patent:
**21.06.89 Bulletin 89/25**

(84) Designated Contracting States:
**DE FR GB NL**

(56) References cited:
**EP-A-0 036 914**
**GB-A-2 054 909**
**GB-A-2 094 027**
**JP-A-51 055 084**
**JP-A-52 112 180**
**JP-A-55 037 250**
**US-A-4 118 660**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **ISHIBASHI, Kazuo Mitsubishi Denki K. K.**
**Nagoya Seisakusho, 1-14 Yadaminami 5-chome**
**Higashi-ku Nagoya-shi Aichi 461 (JP)**
Inventor: **KAMATA, Junichi Mitsubishi Denki K. K.**
**Nagoya Seisakusho, 1-14 Yadaminami 5-chome**
**Higashi-ku Nagoya-shi Aichi 461 (JP)**

(74) Representative: **Lawson, David Glynne et al**
**MARKS & CLERK 57-60 Lincoln's Inn Fields**
**London WC2A 3LS (GB)**

Courier Press, Leamington Spa, England.

EP 0 076 328 B1

## Description

Technical field

This invention relates to a programming apparatus in a numerical control apparatus including a displaying device and operated in question-and-answer form.

Background art

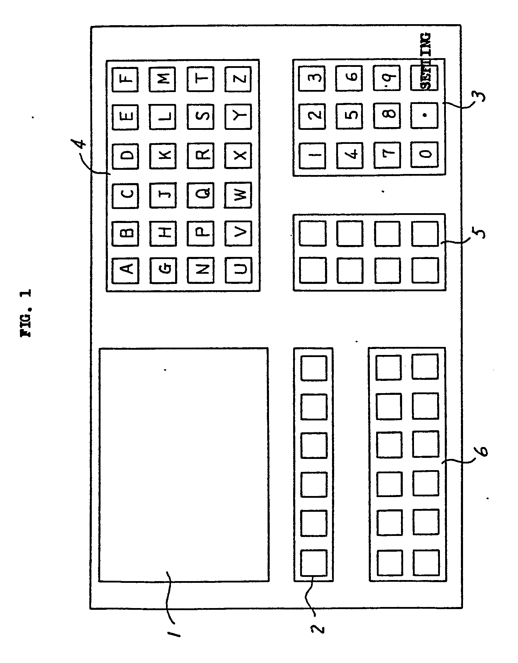

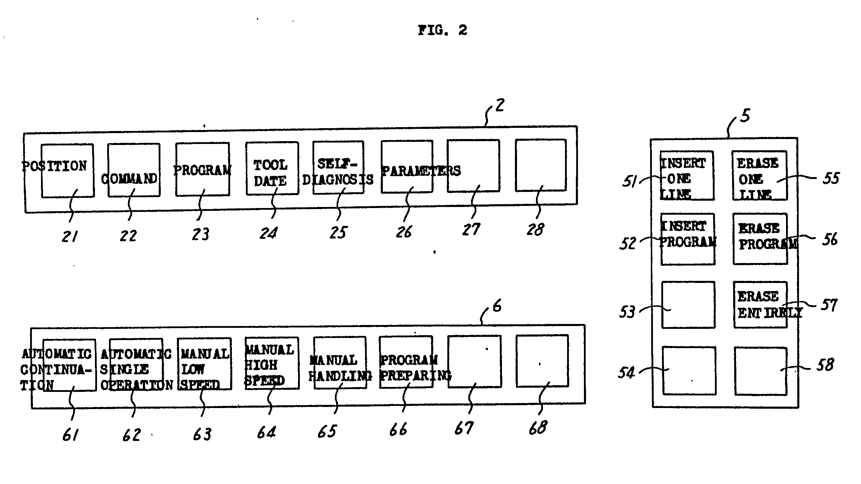

Conventional programming apparatus or numerical control apparatus including a CRT have an operating board whose structure is shown in Figure 1 and the individual portions of which are shown in detail in Figure 2. In those Figures (1) is a CRT and (2) is a picture selecting key group for selecting pictures on the CRT which group consists of a plurality of keys (21) to (28). (3) is a data key group for entering data which group is normally called ten keys. (4) is an address key group consisting of alphabetic letters for distinguishing the contents of the data from one another and (5) is a data editing key group for editing the data entered into a picture face on the CRT (1) which group consists of a plurality of keys (51) to (58). (6) is a mode selecting key group for selecting the operation modes of the apparatus and controlled subjects which group consists of a plurality of keys (61) to (68). Each of these keys is provided with a predetermined switch.

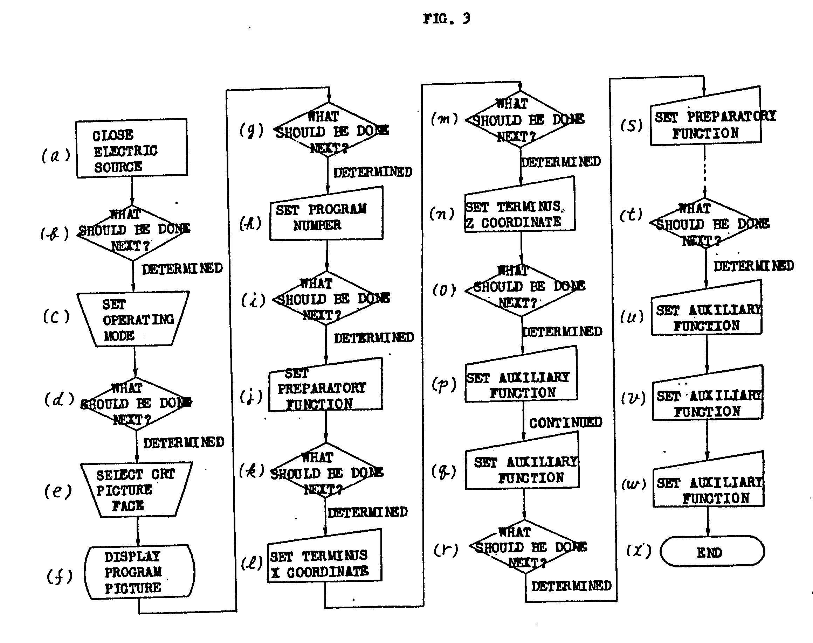

When a working program is entered by said operating board, operating steps of the operator will now be described by using a flow chart shown in Figure 3.

The operator first closes an electric source for the control apparatus (Figure 3(a)). Then that operator judges and determines what should be done next in accordance with the content of a job upon the entry of the working program and comes to the next succeeding movement (Figure 3(b)). In that case the program preparing key (66) of the mode selecting key group (6) is depressed in order to select the operation modes upon the entry of the working program (Figure 3(c)). Further the program switch (23) of the picture selecting key group (3) is depressed (Figure 3(e)) in order to select the pictures on the CRT(1) and a picture for preparing the program is displayed on the CRT(1) (Figure 3(f)). The operator judges what should be done next (Figure 3(e)) and sets a program number (Figure 3(h)) by depressing a P switch preliminary set in the address key group (4), a 1st switch and a 6-th switch coded and a setting switch in the data key group (3). Then a preparatory function is set (Figure 3(j)) by depressing a G switch of the address key group (4) and an O switch and the setting switch of the data key group (3).

Subsequently what should be done next is determined and it is set that a positioning point as an objective has an X coordinate of 246.3 (Figure 3(l) by depressing an X switch of the address key group (4) and a 2nd, a 4-th, the 6-th, and a 3rd switch and the setting switch of the data key group (3). Similarly it is set that the positioning point as the objective has a Z coordinate of 623.56 (Figure 3(n)) by depressing a Z switch of the address key group (4) and the 6-th, 2nd, 3rd, 5-th, 6-th and setting switches of the data key group (3). Thereafter the operator judges and determines what should be done next (Figure 3(o)) and an auxiliary function such as the setting of a spindle, the start or stop of a coolant or the like is set by depressing an M switch of the address key group (4) and the 3rd and setting switches of the data key group (3) (Figure 3(p)). This setting of the auxiliary functions is entirely effected by properly depressing the M switch of the address key group (4) and the numerical switches of the data key group (3) in accordance with the type of each of the auxiliary functions to be set (Figure 3(q)).

Then, in order to set a preparatory function, the G switch of the address key group (4) and the 1st and setting switches of the data key group (3) are depressed thereby to set the preparatory function (Figure 3(s)). Thereafter while observing a program sheet preliminarily prepared, the operator repeats the judgement and determination each time. Furthermore preparatory functions are properly set to complete the preparation of the program (Figure 3(x)).

Now since the conventional numerical control apparatus is constructed as described above and the operator repeats always the judgement and determination, the apparatus has not only caused the problems in that the operation frequency is very high, the operating steps become complicated and the workability is poor but also the same has been disadvantageous in that in the apparatus itself, the operating board includes a large number of the components, and is so much increased in the number of the wirings and assembling steps while being large in space. In addition, improvements in performance of the numerical control apparatus are attended with increases in corresponding switches, lamps etc. This results in the abovementioned disadvantages still more increasing in extent of their adverse conditions.

An apparatus similar to the conventional apparatus described above is the subject of EP—A—0 036 914. This document describes a tracer control apparatus which includes an operator panel comprising a keyboard panel and a control panel. On the keyboard panel, a cathode ray tube display is provided for displaying various parameters. The control panel is provided with mode setting switches and the like. Data and mode selection is fed into the apparatus by means of the keyboard and control panel.

GB—A—2 094 027 discloses a device for programming production equipment. The device comprises an array of visual indicators. Each row of indicators relates to parameters of a particular function which may be programmed into the equipment. Each column of the array has a selector key associated with it. When the selector key corresponding to a parameter indicated in one of the columns of the array is pressed, data relating to that parameter can be fed into the equipment via a separate keyboard. Sentences describing the function of a row may be positioned at one end of the row.

US—A—4 118 660 discloses a programming apparatus for a machining tool. The apparatus includes a display unit for displaying messages relating to a programming function and for displaying a list of parameters relating to the function. A plurality of data switches for entering data corresponding to the programming function and parameters is also provided. The apparatus is operating successively by responding to the displayed messages.

Disclosure of the invention

According to the present invention, there is provided a programming apparatus in a numerical control apparatus, comprising: a display for displaying a message sentence and a plurality of menu sentences corresponding to the message sentence at any given time; a plurality of menu switches each for selecting a displayed menu sentence, each menu switch corresponding to a respective one of the menu sentences; and a plurality of data switches for entering data corresponding to the message sentence or the menu sentence; the apparatus being characterised in that the display is a cathode ray tube display device or a liquid crystal display device arranged to present the message sentence and the menu sentences on the display at predetermined locations, and that the menu sentences are presented at locations on the display which correspond to the locations of the menu switches.

Brief description of the drawings

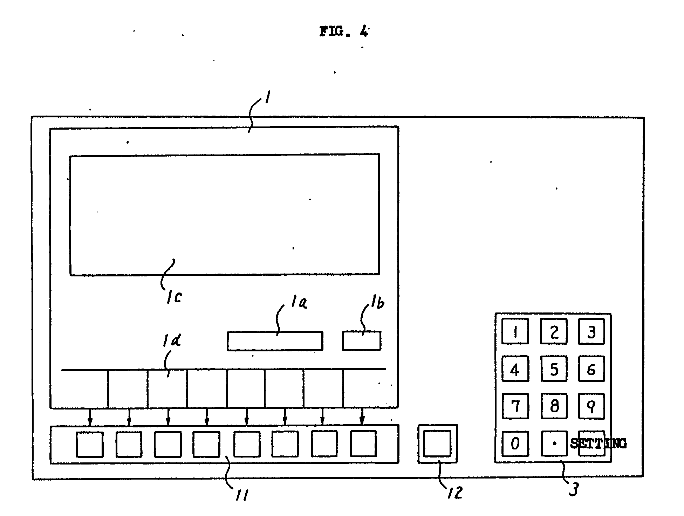

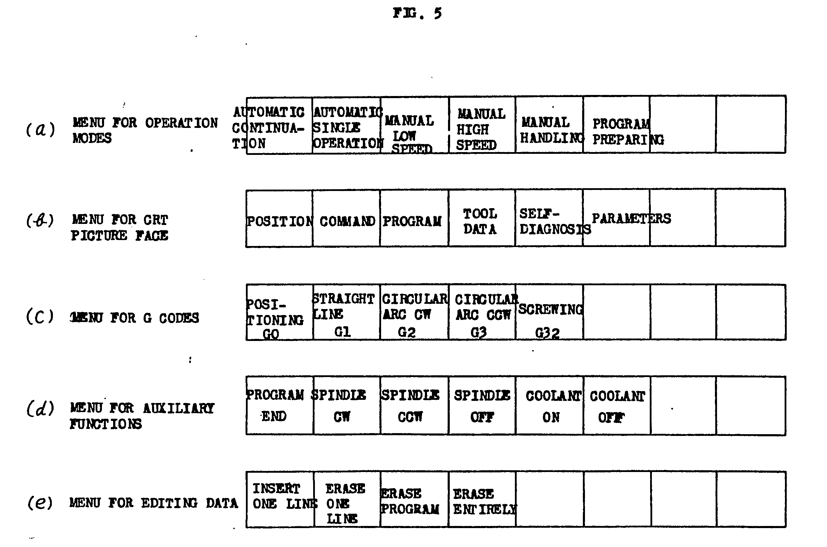

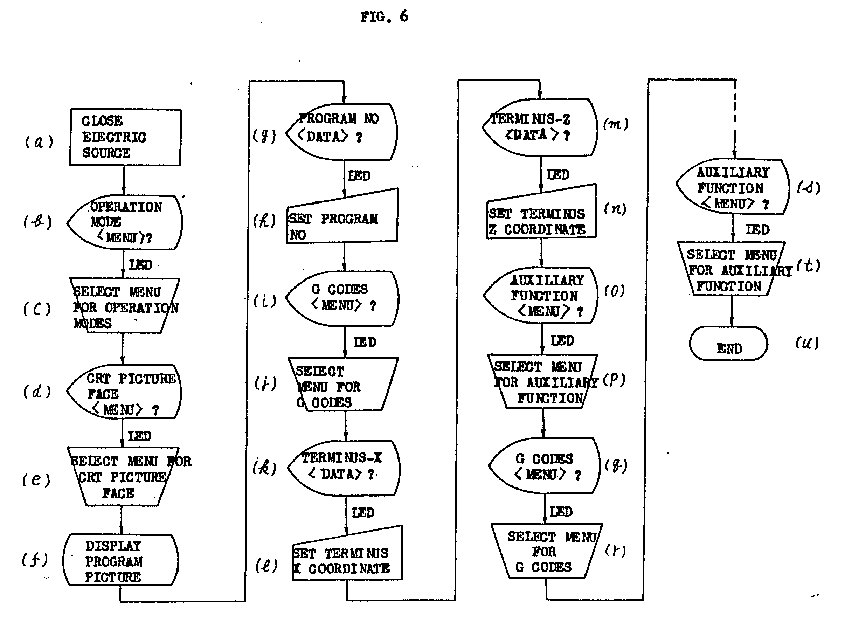

Figures 1 to 3 are to described a conventional apparatus respectively wherein Figure 1 is a front view of an operating board having incorporated therein a CRT as a display device; Figure 2 is a front view illustrating in detail the individual portions of the operating board; and Figure 3 is a flow chart for describing the operating steps of the conventional apparatus. Figures 4 to 6 are to describe one embodiment of the present invention respectively, wherein Figure 4 is a front view of the operating board; Figures 5(a) to (e) are charts illustrating operation items displayed as menus; and Figure 6 is a flow chart for describing the operating steps of the embodiment of the apparatus.

Best mode for carrying out the invention

One embodiment of the present invention will now be described on the basis of Figures 4 to 6. Still more Figure 4 shows the front face of the operating board; Figures 5(a) to (e) show one example of the operating items displayed as the menus; and Figure 6 shows a flow of the operating steps of the operator.

In Figure 4 (1) is a CRT a picture of which is composed of letters, for example, in 24 rows and 80 columns and has reserved thereon a message display unit (1a), an input data display unit (1b), a set data display unit (1c) and a menu display unit (1d) by which the present invention is characterized. Furthermore disposed on this operating board is a menu selecting key group (11) including a plurality of switches corresponding to the operating items on the said menu display unit (1d), a menu stepping key (12) for manually stepping pages of the menu. And the pages of the menu displayed on the said menu display unit (1d) can be renewed in accordance with the contents of the menu successivelly displayed on the said menu display unit (1a) or through the manual operation of the menu stepping key (12).

Figures 5(a) to (e) show one example of the operating items on each page of the menus displayed on the said menu display unit (1d) wherein Figure 5(a) shows a menu for the operation modes; Figure 5(b) a menu for the picture face of the CRT; Figure 5(c) a menu for G codes; Figure 5(d) a menu for auxiliary functions; and Figure 5(e) shows a menu for editing data. By depressing that key switch at its position corresponding to the menu for the desired operating item on this page within the menu selecting key group (11), the operator attains his or her purpose. Accordingly the content of the message displayed on the message display unit (1a) can be successively renewed either by using the data key group (3) to enter the input display unit (1b) with data or by selecting a menu for the desired operating item among the menus displayed on the menu display unit (1b) with this. The operator is led by that message and may carry forward the operation while renewing the message.

Still more pages difficult to be displayed correspondingly to messages as in the menu for editing data are constructed to be manually displayed by depressing the switches of the menu stepping key (12).

The description will now be made by means of a flow chart shown in Figure 6 and with reference to how the message is renewed, that is, how the operator answers a question by a message. For convenience's sake, to prepare a program is taken as an example.

When the operator first closes an electric source for the control apparatus (Figure 6(a)), an "OPERATION MODE <MENU>?" which is a message for setting an operation mode and the menu for operation modes shown in Figure 5(a) are automatically displayed on the message display unit (1a) and the menu display unit (1d) on the picture face of the CRT (1) respectively. Thus the operator is led by them to select a "PROGRAM PREPARING" from the menu for the said operation modes (Figure 5(a)) and depresses that switch corresponding thereto of the menu selecting key group (11) (Figure 6(c)). Then a message "CRT PICTURE FACE <MENU>?" and the menu for the CRT picture face (Figure 5(b)) are automatically displayed on the message display unit (1a) and the menu display unit (1d) respectively. The operator selects "PROGRAM" from the menu for the CRT picture face and depresses that switch corresponding thereto of the menu selecting key group (11) (Figure 6(e)). Further as the picture face of the CRT has a "PROGRAM NO <DATA>?" which is a messaage for preparing the program, displayed on the message display unit (1a), a 1st, a 6-th and a setting switch of the data key group (3) coded and set as a program number are depressed (Figure 6(h)) whereupon that program number is displayed on the input data display unit (1b). Thereby the program number is set to display a message "G CODES <MENU>?" and the menu for the G codes shown in Figure 5(c) on the message display unit (1a) and the menu display unit (1d). The operator selects "FIRST LINE GOES" from the said menu for G codes and depresses that switch corresponding thereto of the menu selecting key group (11) to set a "POSITIONING GOES" (Figure 6(j)). Subsequently a message "TERMINUS—X <DATA>?" for setting a terminus is displayed on the message display unit (1a) on the picture face 1c of the CRT and displayed on the input data display unit 1b by depressing a 2nd, a 4-th, the 6-th, a ·, a 3rd and the setting switch of the data key group (3) and hereweith a terminus X coordinate is set to 246.3 (Figure 6(l)). Similarly a message "TERMINUS—Z <DATA>?" is displayed on the picture face of the CRT and the 6-th, the 2nd, the 3rd, the ·, a 5-th, the 6-th and the setting switch of the data key groups (3) are depressed to set a terminus Z coordinate to 623.56 (Figure 6(n)).

Thereafter a message "AUXILIARY FUNCTION <MENU>?" for setting an auxiliary function and the menu for auxiliary functions shown in Figure 5(d) are displayed on the message display unit (1a) and the menu display unit (1d) on the CRT picture face (1) respectively and a "SPINDLE CW", "COOLANT ON" and others are properly selected from that menu and the switches corresponding thereto of the menu selecting key group (11) are depressed (Figure 6(p)). Still more, a message "G CODES <MENU>?" and the menu for G codes (Figure 5(c)) are displayed, and a "STRAIGHT LINE G1" is selected from that menu and that switch corresponding thereto of the menu selecting key group (11) is depressed whereby a cutting into a straight line is set (Figure 6(r)).

Hereinafter the setting of data or the selection of the menus is repeated through the leading by messages displayed on the basis of a predetermined program format after which the menu for auxiliary functions (Figure 5(d)) is displayed and the switches corresponding to "PROGRAM END", "SPINDEL OFF", "COOLANT OFF" etc. of the menu selecting key groups (11) are depressed whereby the program is completed to be prepared.

Furthermore the menu and data subsequently set in this way are displayed, as the completed program, on the set data display unit (1c) on the CRT(1).

While the abovementioned embodiment has been illustrated in terms of the messages and menus displayed with everyday language symbols, codes or others may be used. Also while the messages have been displayed with a single sentence one after another, a plurality of sentences may be displayed at a time.

Furthermore the ON and OFF states of the menu may be distinguished from each other by inverting letters on the picture face one to the other of white and black, brushing them, or making them small or capital. Also, in addition to the display device for displaying relying on a CRT, the liquid crystal display and other may be substituted for the CRT so long as they can display a multitude of letters.

Also while the abovementioned embodiment has been described in conjunction with the preparation of program it is applicable to the operation of normal machines. At that time the items of setting data can be omitted.

As described above and according to the present invention, the operator answers questions from messages by either setting data or selecting the menus whereby the operator can successively carry forward the operations and may regularly perform the operations. Also since the menu selecting key has different functions corresponding to the individual menus one for each page thereof, the number of the switches on the operating board can be extremely decreased. Furthermore the messages and menus are processed by changing software resulting in the effect that the functions can readily be varied or extended.

**Claims**

1. A programming apparatus in a numerical control apparatus comprising: a display (1) for displaying a message sentence and a plurality of menu sentences corresponding to the message sentence at any given time; a plurality of menu switches (11) each for selecting a displayed menu sentence, each menu switch corresponding to a respective one of the menu sentences; and a plurality of data switches (3) for entering data corresponding to the message sentence or the menu sentence; the apparatus being characterised in that the display (1) is a cathode ray tube display device or a liquid crystal display device arranged to present the message sentence and the menu sentences at predetermined locations (1a, 1d) of the display, and that the menu sentences are presented at locations (1d) on the display which correspond to the locations of the menu switches (11).

2. A programming apparatus according to claim 1, characterised in that the display device has a message display unit (1a), a menu display unit (1d), an input data display unit (1b), and a set data display unit (1c).

3. A programming apparatus according to claim 1 characterised in that the display of the menu sentences is effected by using everyday language.

4. A programming apparatus according to claim 1 characterised in that the display of the menu sentences is effected by using symbols or codes.

**Patentansprüche**

1. Programmiereinheit in einer numerischen Steuerung, umfassend: eine Anzeige (1) zum Anzeigen eines Nachrichtensatzes und einer Vielzahl von Menüsätzen, die dem Nachrichtensatz zu einer vorgegebenen Zeit entsprechen; eine Vielzahl von Menüschaltern (11) jeweils zum Wählen eines angezeigten Menüsatzes, wobei jeder Menüschalter einem der Menüsätze entspricht; und eine Vielzahl von Datenschaltern (3) zum Eingeben von Daten, die dem Nachrichtensatz oder dem Menüsätz entsprechen; wobei die Vorrichtung dadurch gekennzeichnet ist, daß die Anzeige (1) eine Kathodenstrahlröhren-Anzeigeeinrichtung oder eine Flüssigkristall-Anzeigeeinrichtung ist, die so angeordnet ist, daß sie den Nachrichtensatz und die Menüsätze an vorgegebenen Orten (1a, 1d) der Anzeige präsentiert, und daß die Menüsätze an Orten (1d) auf der Anzeige präsentiert werden, die den Orten der Menüschalter (11) entsprechen.

2. Programmiereinheit nach Anspruch 1, dadurch gekennzeichnet, daß die Anzeigeeinrichtung eine Nachrichtenanzeigeeinheit (1a), eine Menüanzeigeeinheit (1d), eine Eingabedatenanzeigeeinheit (1b) und eine Vorgabedatenanzeigeeinheit (1c) aufweist.

3. Programmiereinheit nach Anspruch 1, dadurch gekennzeichnet, daß die Anzeige der Menüsätze unter Verwendung der Umgangssprache vorgenommen wird.

4. Programmiereinheit nach Anspruch 1, dadurch gekennzeichnet, daß die Anzeige der Menüsätze unter Verwendung von Symbolen oder Codes vorgenommen weird.

**Revendications**

1. Appareil de programmation dans un appareil de commande numérique comprenant: un affichage (1) pour afficher une phrase de message et une pluralité de phrases de menu correspondant à la phrase de message à tout instant donné; une pluralité de commutateurs de menu (11) pour choisir chacun une phrase de menu affichée, chaque commutateur de menu correspondant à l'une respective des phrases de menu; et une pluralité de commutateurs de données (3) pour introduire les données correspondant à la phrase de message ou à la phrase de menu; l'appareil étant caractérisé en ce que l'affichage (1) est un dispositif d'affichage à tube cathodique ou un dispositif d'affichage à cristaux liquides disposé pour présenter la phrase de message et les phrases de menu à des positions prédéterminés (1a, 1d) de l'affichage, et en ce que les phrases de menu sont présentées en des positions (1d) sur l'affichage qui correspondant aux positions des commutateurs de menu (11).

2. Appareil de programmation selon la revendication 1, caractérisé en ce que le dispositif d'affichage comporte une unité (1a) d'affichage de message, une unité (1d) d'affichage de menu, une unité (1b) d'affichage de données d'entrée, et une unité (1c) d'affichage de données établies.

3. Appareil de programmation selon la revendication 1, caractérisé en ce que l'affichage des phrases de menu est réalisé en utilisant le langage de chaque jour.

4. Appareil de programmation selon la revendication 1, caractérisé en ce que l'affichage des phrases de menu est réalisé en utilisant des symboles ou des codes.

FIG. 1

FIG. 2

FIG. 3

(a) CLOSE ELECTRIC SOURCE

(b) WHAT SHOULD BE DONE NEXT?

DETERMINED

(c) SET OPERATING MODE

(d) WHAT SHOULD BE DONE NEXT?

DETERMINED

(e) SELECT CRT PICTURE FACE

(f) DISPLAY PROGRAM PICTURE

(g) WHAT SHOULD BE DONE NEXT?

DETERMINED

(h) SET PROGRAM NUMBER

(i) WHAT SHOULD BE DONE NEXT?

DETERMINED

(j) SET PREPARATORY FUNCTION

(k) WHAT SHOULD BE DONE NEXT?

DETERMINED

(l) SET TERMINUS X COORDINATE

(m) WHAT SHOULD BE DONE NEXT?

DETERMINED

(n) SET TERMINUS Z COORDINATE

(o) WHAT SHOULD BE DONE NEXT?

DETERMINED

(p) SET AUXILIARY FUNCTION

CONTINUED

(q) SET AUXILIARY FUNCTION

(r) WHAT SHOULD BE DONE NEXT?

DETERMINED

(S) SET PREPARATORY FUNCTION

(t) WHAT SHOULD BE DONE NEXT?

DETERMINED

(u) SET AUXILIARY FUNCTION

(v) SET AUXILIARY FUNCTION

(w) SET AUXILIARY FUNCTION

(x) END

FIG. 4

FIG. 5

| | | | | | | | | |
|---|---|---|---|---|---|---|---|---|
| (a) MENU FOR OPERATION MODES | AUTOMATIC CONTINUA-TION | AUTOMATIC SINGLE OPERATION | MANUAL LOW SPEED | MANUAL HIGH SPEED | MANUAL HANDLING | PROGRAM PREPARING | | |

| | | | | | | | | |
|---|---|---|---|---|---|---|---|---|
| (b) MENU FOR CRT PICTURE FACE | POSITION | COMMAND | PROGRAM | TOOL DATA | SELF-DIAGNOSIS | PARAMETERS | | |

| | | | | | | | | |
|---|---|---|---|---|---|---|---|---|
| (c) MENU FOR G CODES | POSI-TIONING G0 | STRAIGHT LINE G1 | CIRCULAR ARC CW G2 | CIRCULAR ARC CCW G3 | SCREWING G32 | | | |

| | | | | | | | | |
|---|---|---|---|---|---|---|---|---|
| (d) MENU FOR AUXILIARY FUNCTIONS | PROGRAM END | SPINDLE CW | SPINDLE CCW | SPINDLE OFF | COOLANT ON | COOLANT OFF | | |

| | | | | | | | | |
|---|---|---|---|---|---|---|---|---|
| (e) MENU FOR EDITING DATA | INSERT ONE LINE | ERASE ONE LINE | ERASE PROGRAM | ERASE ENTIRELY | | | | |

EP 0 076 328 B1

FIG. 6

(a) CLOSE ELECTRIC SOURCE
(b) OPERATION MODE ⟨MENU⟩?
SELECT MENU FOR OPERATION MODES (C)
(d) CRT PICTURE FACE ⟨MENU⟩?
SELECT MENU FOR CRT PICTURE FACE (e)
(f) DISPLAY PROGRAM PICTURE

(g) PROGRAM NO ⟨DATA⟩?
SET PROGRAM NO (h)
(i) G CODES ⟨MENU⟩?
SELECT MENU FOR G CODES (j)
(k) TERMINUS-X ⟨DATA⟩?
SET TERMINUS X COORDINATE (l)

(m) TERMINUS-Z ⟨DATA⟩?
SET TERMINUS Z COORDINATE (n)
(o) AUXILIARY FUNCTION ⟨MENU⟩?
SELECT MENU FOR AUXILIARY FUNCTION (p)
(q) G CODES ⟨MENU⟩?
SELECT MENU FOR G CODES (r)

(s) AUXILIARY FUNCTION ⟨MENU⟩?
SELECT MENU FOR AUXILIARY FUNCTION (t)
(u) END